# EUROPEAN PATENT SPECIFICATION

(11) **EP 1 361 083 B1**
(45) Date of publication and mention of the grant of the patent: **09.01.2008**
(21) Application number: 03010359.2
(22) Date of filing: 08.05.2003
(51) Int. Cl.: B60G 7/00

(54) **Link rod for a motor-vehicle suspension**
Verbindungsstange für eine Kraftfahrzeugaufhängung
Bielle de liaison pour la suspension d'un véhicule automobile

(30) Priority: 10.05.2002 IT TO20020396
(43) Date of publication of application: 12.11.2003
(73) Proprietor: Sistemi Sospensioni S.p.A., 20011 Corbetta (MI) (IT)
(72) Inventor: Gerrard, Miles Barnaby, 10124 Torino (IT)
(74) Representative: Rondano, Davide

(56) References cited:
- EP-A- 0 163 509
- EP-A- 0 502 310
- EP-A- 0 933 241
- EP-A- 1 288 028
- FR-A- 1 060 549
- FR-A- 2 563 473
- FR-A- 2 624 065
- US-A- 3 693 746
- US-A- 4 772 043
- US-A- 5 718 445
- US-B1- 6 328 322
- PATENT ABSTRACTS OF JAPAN vol. 014, no. 193 (M-0963), 19 April 1990 (1990-04-19) -& JP 02 037008 A (MAZDA MOTOR CORP), 7 February 1990 (1990-02-07)

## Description

The present invention relates in general to a motor-vehicle independent suspension system, and in particular to a link rod for connection of a wheel-carrier strut to the vehicle structure in an independent suspension system.

It is known the use of rods for connection of the wheel-carrier strut to the vehicle structure in independent suspension systems. For example, multilink suspension arrangements adopt a large number of rods, usually four for the steering wheels and five for the non-steering wheels, which are articulated at the one end to the wheel carrier and at the opposite end to the vehicle structure and act as connecting rods, that is, as constraints intended to remove the sole degrees of freedom of translational displacement along their longitudinal axes.

Nowadays, multilink systems provide the best solution to ensure high elasto-kinematic performances, but are undoubtedly much more expensive than simpler suspension arrangements.

A link rod according to the preamble of Claim is known from EP 1 288 028. This document discloses a motor-vehicle suspension link comprising a pair of flexible blade-like elements, an elongated rigid tubular body by means of which the flexible blade-like elements are connected with each other, and first and second pairs of bushes accommodated into respective seats, by means of which the arm is articulated both to the wheel carrier and to the vehicle structure. According to this known solution, the elongated rigid tubular body is arranged longitudinally, that is to say, parallel to the axes of rotation of the arm relative to the wheel-carrier and the vehicle structure. Therefore, the axes of articulation of all the seats are parallel to the axis of the elongated rigid tubular body.

Also disclosed in this prior art document is a suspension link comprising a first elongated rigid tubular body rotatably connected to the vehicle structure by means of bushes accommodated into respective seats, a second elongated rigid tubular body rotatably connected to the wheel-carrier by means of bushes accommodated into respective seats, and a plurality of blade-like elements connecting the first and second elongated rigid tubular bodies with each other. Also in this case the axes of articulation of all the seats are parallel to the axes of the elongated rigid tubular bodies.

The suspension links described above remove or control three degrees of freedom of the wheel-carrier. Only two further degrees of freedom have thus to be removed. These known suspension links therefore provide less flexibility of use than other known links which remove or control a lower number of degrees of freedom. On the other hand, the use of too many links greatly complicates the architecture of the suspension.

US 4 772 043 discloses a motor-vehicle suspension link comprising first and second rigid arms, a pair of flexible blade-like elements connecting the rigid arms to each other, a pair of first articulation seats for articulated connection of the first rigid arm to a wheel carrier and to a vehicle structure, and a pair of second articulation seats for articulated connection of the second rigid arm to the wheel carrier and to the vehicle structure.

FR 1 060 549 discloses a distortion frame intended to be mounted between the chassis and the wheels of a motor vehicle in place of conventional torsion bars in order to reduce roll at corners. The frame comprises a pair of rods of circular cross-section and a pair of plate elements attached to the ends of the rods. The plate elements are stiff under bending but compliant under torsion and are articulated both to the chassis and to the wheels.

It is therefore the object of the present invention to provide a simple and low-cost solution to improve the elasto-kinematic performances of a motor-vehicle independent suspension.

This object is fully achieved according to the present invention by virtue of a link rod as defined in independent Claim 1. Preferred embodiments of the link rod are specified in dependent claims.

The invention will be described in greater detail hereinafter, purely by way of non-limiting example, with reference to the appended drawings, in which:
Figure 1 is a perspective view of a link rod with two degrees of freedom for a motor-vehicle independent suspension, according to a first embodiment of the invention;
Figure 2 is a perspective view of a link rod of the same type as Figure 1, according to a further embodiment of the invention;
Figure 3 is a perspective view of a link rod with one rotational degree of freedom according to the invention; and
Figure 4 is a perspective view of a similar two-rod system, for controlling three degrees of freedom of the wheel carrier, which does not form part of the invention.

In the description and the claims which follow, terms such as "longitudinal" and "transverse", "inner" and "outer", "front" and "rear" are to be intended as referred to the mounted condition on the vehicle.

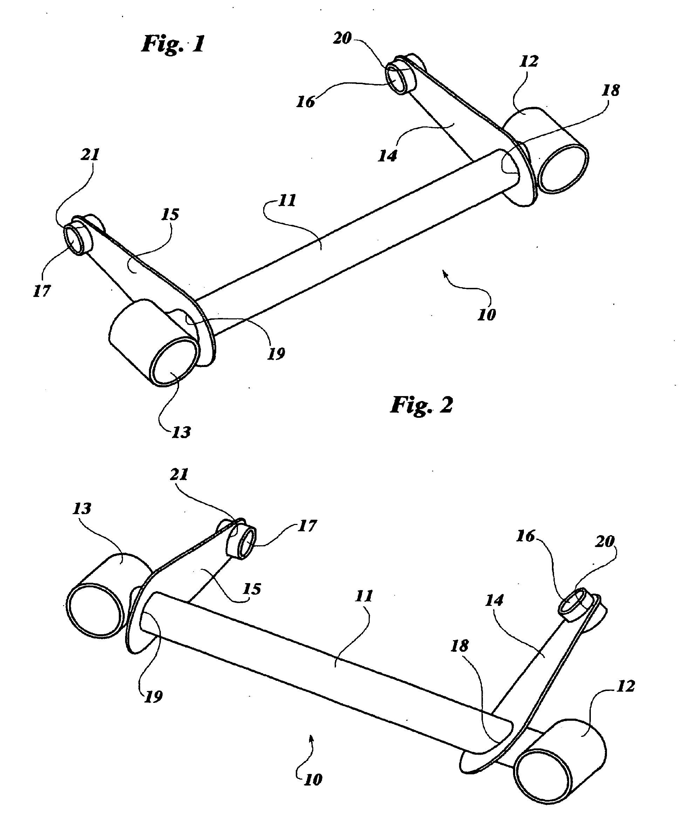

By referring first to Figures 1 and 2, a link rod according to the invention, for connection of the wheel carrier of a motor-vehicle wheel (not shown) with the motor-vehicle structure (also, not shown) through known articulation means, is generally indicated 10.

The rod 10 comprises an essentially straight, elongated, central body 11 preferably with a hollow cross-section of high torsional stiffness. First seats 12, 13 for articulation of the rod to the wheel carrier and the vehicle structure, respectively, are provided at the ends of the central body 11. In the illustrated examples, the seats 12, 13 are cylindrical tubular elements attached in per-se-known manner (for example, by welding) to the body 11, with their axes perpendicular to the longitudinal axis of the body 11 and parallel to each other.

Two flexible elements 14, 15 carrying at their free ends second cylindrical seats 16, 17 for articulation of the rod to the wheel carrier and the vehicle structure, respectively, are secured to the central body 11 close to the seats 12, 13. These elements are chosen to have a high ratio of the stiffness in a given direction to the stiffness in one of the perpendicular directions thereto.

As shown in the two constructional examples of Figures 1 and 2, the flexible elements 14, 15 are advantageously formed as blade-like elements from a sheet of metal or composite material (or of any other material having adequate mechanical properties), so as to be stiff in their middle planes but flexible in the perpendicular directions thereto.

Each flexible element has a first hole 18, 19 for fitting to the central body 11 and a second hole 20, 21 for connection with the second articulation seat 16, 17. Advantageously, each second articulation seat 16, 17 is arranged with its axis substantially perpendicular to the middle plane of the respective flexible element 14, 15. The flexible elements 14, 15 may be arranged with their middle planes perpendicular to the longitudinal axis of the body 11 (Figure 1), or inclined thereto (Figure 2, element 14), thereby enabling to set the orientation of the principal stiffnesses of the rod with respect to the pair of members connected thereto.

Clearly, a link rod of this type is capable of providing a first translational constraint along the longitudinal axis of the central body 11 and a second rotational constraint about a perpendicular direction to the middle plane of each flexible element 14, 15.

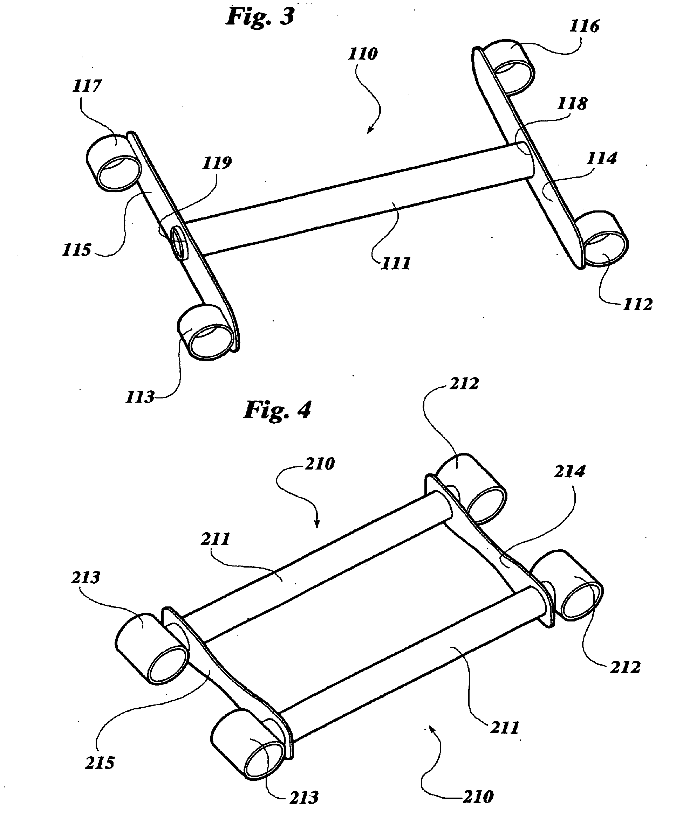

Figure 3 shows a further link rod 110 according to the invention, capable of providing only a rotational degree of freedom about the longitudinal axis of an essentially straight, elongated, central body 111, preferably with a hollow cross-section of high torsional stiffness. At the inner and outer ends of the central body 110 there are attached respective central portions of two blade-like flexible elements 114, 115 carrying at their free ends first and second cylindrical seats 112, 116 and 113, 117, respectively, for articulation of the rod to the wheel carrier and the vehicle structure, respectively. In the illustrated example, the seats 112, 116 and 113, 117 are cylindrical tubular elements secured at the outer sides of the respective flexible elements 114 and 115 and having their axes aligned in pair and perpendicular to the longitudinal axis of the body 111.

Here, also, the flexible elements 114, 115 are advantageously formed as blade-like elements and have each a hole 118, 119 provided in an intermediate portion thereof for fitting to the central body 111.

Due to the flexibility of the blades 114, 115 in the perpendicular directions to their respective middle planes, the link rod 110 does not react significantly to the transverse forces transmitted by the wheel carrier through the articulation seats 112, 116. On the other hand, by virtue of the stiffness of the blades 114, 115 in their middle planes and of the torsional stiffness of the central body 111, the rod 110 controls the rotational degree of freedom about the longitudinal axis of the body 111.

The idea of associating a flexible element to a conventional rod in order to control a rotational degree of freedom may also be applied to a set of two connecting rods arranged in parallel, as shown in Figure 4. However, such an arrangement does not form part of the invention. Here, two connecting rods 210 of conventional shape, each comprising an essentially straight, elongated, central body 211 and first and second cylindrical seats 212 and 213 attached at the inner and outer ends of the central body, respectively, for articulation of the connecting rod to the wheel carrier and the vehicle structure, respectively, are arranged parallel to each other and are connected in the region of the seats 212 and 213 by a pair of flexible elements 214 and 215 like those described above.

By virtue of such an arrangement, a third torsional constraint is attained between the wheel carrier and the vehicle structure in addition to the two translational constraints along the longitudinal axes of the connecting rods.

Naturally, the principle of the invention remaining un-changed, embodiments and manufacturing details may vary widely from those described and illustrated purely by way of non-limiting example.

## Claims

1. Link rod (10; 110) for a motor-vehicle suspension, comprising
a single elongated rigid body (11; 111) having a longitudinal axis,
first articulation seats (12, 13; 112, 113) for articulated connection of the link rod (10; 110) to a wheel carrier and to a vehicle structure, respectively,
a pair of flexible elements (14, 15; 114, 115) attached to the opposite ends of the rigid body (11; 111), and
second articulation seats (16, 17; 116, 117) for articulated connection of the link rod (10; 110) to the wheel carrier and the vehicle structure, respectively;
whereby the link rod (10; 110) is capable of controlling a rotational degree of freedom of the wheel carrier with respect to the vehicle structure by virtue of the flexibility of the flexible elements (14, 15; 114, 115);
**characterised in that** the axes of articulation of the first articulation seats (12, 13; 112, 113) are perpendicular tc the longitudinal axis of the rigid body (11; 111).

2. Link rod according to Claim 1, wherein each flexible element (14, 15; 114, 115) is formed as a plate- or blade-like element, so as to be stiff in its middle plane and flexible in a perpendicular direction to its middle plane.

3. Link rod according to Claim 2, wherein the flexible elements (14, 15; 114, 115) are arranged with their middle planes substantially perpendicular to the longitudinal axis of the rigid body (11; 111), so as to provide a rotational constraint about that axis.

4. Link rod according to Claim 2, wherein at least one (14) of the flexible elements (14, 15) is arranged with its middle plane inclined to the longitudinal axis of the rigid body (11).

5. Link rod according to any of the preceding claims, wherein the rigid body (11; 111) is a tubular body.

6. Link rod according to any of the preceding claims, wherein the first articulation seats (12, 13) are provided at the opposite ends of the rigid body (11).

7. Link rod according to any of the preceding claims, wherein each of the flexible elements (14, 15) is attached at a first end thereof to the rigid body (11).

8. Link rod according to Claim 7, wherein each of the flexible elements (14, 15) carries at its opposite end a respective second articulation seat (16, 17).

9. Link rod according to Claim 7 or Claim 8, wherein the axes of articulation of the second articulation seats (16, 17) are arranged each substantially perpendicular to the middle plane of the respective flexible element (14, 15; 114, 115).

10. Link rod according to any of Claims 1 to 5, wherein at least one of the flexible elements (114, 115) is attached with an intermediate portion thereof (118, 119) to a respective end of the rigid body (111) and carries at its opposite ends a first seat (112, 116) and a second seat (113, 117).

11. Link rod according to Claim 10, wherein the axes of articulation of both the first and second articulation seats (112, 113, 116, 117) are perpendicular to the longitudinal axis of the rigid body (111).

## Patentansprüche

1. Verbindungsstange (10; 110) für die Aufhängung bei einem Kraftfahrzeug, wobei die Verbindungsstange enthält:
einen einzigen länglichen, starren Körper (11; 111), der eine Längsachse besitzt,
erste Gelenkssitze (12, 13; 112, 113), um die Verbindungsstange (10; 110) mit einem Radträger bzw. mit einem Fahrzeugaufbau gelenkig zu verbinden,
ein Paar von flexiblen Elementen (14, 15; 114, 115), die an entgegengesetzten Enden des starren Körpers (11; 111) befestigt sind, und
zweite Gelenkssitze (16, 17; 116, 117), um die Verbindungsstange (10; 110) mit dem Radträger bzw. mit dem Fahrzeugaufbau gelenkig zu verbinden;
wodurch die Verbindungsstange (10; 110) einen Rotations-Freiheitsgrad des Radträgers gegenüber dem Fahrzeugaufbau mit Hilfe der Flexibilität der flexiblen Elemente (14, 15; 114, 115) steuern kann;
**dadurch gekennzeichnet, dass** die Gelenksachsen der ersten Gelenkssitze (12, 13; 112, 113) senkrecht zur Längsachse des starren Körpers (11; 111) verlaufen.

2. Verbindungsstange gemäß Anspruch 1, wobei jedes flexible Element (14, 15; 114, 115) von einem plattenartigen oder blattartigen Element so gebildet wird, dass es in seiner Mittelebene steif und in einer Richtung senkrecht zu seiner Mittelebene flexibel ist.

3. Verbindungsstange gemäß Anspruch 2, wobei die flexiblen Elemente (14, 15; 114, 115) so angeordnet sind, dass ihre Mittelebenen im Wesentlichen senkrecht zur Längsachse des starren Körpers (11; 111) verlaufen, um eine Rotations-Beschränkung um diese Achse zu liefern.

4. Verbindungsstange gemäß Anspruch 2, wobei zumindest eines (14) der flexiblen Elemente (14, 15) so angeordnet ist, dass seine Mittelebene zur Längsachse des starren Körpers (11) geneigt ist.

5. Verbindungsstange gemäß irgendeinem der bisherigen Ansprüche, wobei der starre Körper (11; 111) ein Rohrkörper ist.

6. Verbindungsstange gemäß irgendeinem der bisherigen Ansprüche, wobei die ersten Gelenkssitze (12, 13) an entgegengesetzten Enden des starren Körpers (11) vorgesehen sind.

7. Verbindungsstange gemäß irgendeinem der bisherigen Ansprüche, wobei jedes der flexiblen Elemente (14, 15) mit einem ersten Ende am starren Körper (11) angebracht ist.

8. Verbindungsstange gemäß Anspruch 7, wobei jedes der flexiblen Elemente (14, 15) an seinem entgegengesetzten Ende einen entsprechenden zweiten Gelenkssitz (16, 17) trägt.

9. Verbindungsstange gemäß Anspruch 7 oder Anspruch 8, wobei die Gelenksachsen der zweiten Gelenkssitze (16, 17) im Wesentlichen senkrecht zur Mittelebene des entsprechenden flexiblen Elements (14, 15; 114, 115) angeordnet sind.

10. Verbindungsstange gemäß irgendeinem der Ansprüche 1 bis 5, wobei zumindest eines der flexiblen Elemente (114, 115) an einer Zwischenstelle (118, 119) an einem entsprechenden Ende des starren Körpers (111) befestigt ist und an seinen entgegengesetzten Enden einen ersten Sitz (112, 116) sowie einen zweiten Sitz (113, 117) trägt.

11. Verbindungsstange gemäß Anspruch 10, wobei die Gelenksachsen sowohl der ersten als auch der zweiten Gelenkssitze (112, 113, 116, 117) senkrecht zur Längsachse des starren Körpers (111) verlaufen.

## Revendications

1. Bielle de liaison (10 ; 110) pour une suspension de véhicule à moteur, comprenant :
un corps rigide allongé unique (11 ; 111) ayant un axe longitudinal,
des premiers sièges d'articulation (12, 13 ; 112, 113) pour le raccordement articulé de la bielle de liaison (10 ; 110) à un support de roue et à une structure de véhicule, respectivement,
une paire d'éléments flexibles (14, 15 ; 114, 115) fixés aux extrémités opposées du corps rigide (11 ; 111), et
des seconds sièges d'articulation (16, 17 ; 116, 117) pour le raccordement articulé de la bielle de liaison (10 ; 110) au support de roue et à la structure du véhicule, respectivement ;
moyennant quoi la bielle de liaison (10 ; 110) est capable de contrôler un degré de liberté de rotation du support de roue par rapport à la structure de véhicule en vertu de la flexibilité des éléments flexibles (14, 15 ; 114, 115) ;
**caractérisée en ce que** les axes d'articulation des premiers sièges d'articulation (12, 13 ; 112, 113) sont perpendiculaires à l'axe longitudinal du corps rigide (11 ; 111).

2. Bielle de liaison selon la revendication 1, dans laquelle chaque élément flexible (14, 15 ; 114, 115) est formé comme un élément en forme de plaque ou de pale, afin d'être rigide dans son plan central et flexible dans une direction perpendiculaire à son plan central.

3. Bielle de liaison selon la revendication 2, dans laquelle les éléments flexibles (14, 15 ; 114, 115) sont agencés avec leurs plans centraux sensiblement perpendiculaires à l'axe longitudinal du corps rigide (11 ; 111) afin de fournir une contrainte de rotation autour de cet axe.

4. Bielle de liaison selon la revendication 2, dans laquelle au moins l'un (14) des éléments flexibles (14, 15) est agencé avec son plan central incliné par rapport à l'axe longitudinal du corps rigide (11).

5. Bielle de liaison selon l'une quelconque des revendications précédentes, dans laquelle le corps rigide (11 ; 111) est un corps tubulaire.

6. Bielle de liaison selon l'une quelconque des revendications précédentes, dans laquelle les premiers sièges d'articulation (12, 13) sont prévus au niveau des extrémités opposées du corps rigide (11).

7. Bielle de liaison selon l'une quelconque des revendications précédentes, dans laquelle chacun des éléments flexibles (14, 15) est fixé au niveau de sa première extrémité au corps rigide (11).

8. Bielle de liaison selon la revendication 7, dans laquelle chacun des éléments flexibles (14, 15) supporte, au niveau de son extrémité opposée, un second siège d'articulation (16, 17) respectif.

9. Bielle de liaison selon la revendication 7 ou la revendication 8, dans laquelle les axes d'articulation des seconds sièges d'articulation (16, 17) sont agencés chacun sensiblement perpendiculaires au plan central de l'élément flexible (14, 15 ; 114, 115) respectif.

10. Bielle de liaison selon l'une quelconque des revendications 1 à 5, dans laquelle au moins l'un des éléments flexibles (114, 115) est fixé avec sa partie intermédiaire (118, 119) à une extrémité respective du corps rigide (111) et supporte au niveau de ses extrémités opposées, un premier siège (112, 116) et un second siège (113, 117).

11. Bielle de liaison selon la revendication 10, dans laquelle les axes d'articulation des premiers et seconds sièges d'articulation (112, 113, 116, 117) sont perpendiculaires à l'axe longitudinal du corps rigide (111).
